# FASCICULE DE BREVET EUROPEEN

(11) **EP 3 982 719 B1**
(45) Date de publication et mention de la délivrance du brevet: **05.07.2023**
(21) Numéro de dépôt: 20731984.9
(22) Date de dépôt: 09.06.2020
(51) Int. Cl.: A01K 63/10, E04H 4/16

(54) **DISPOSITIF DE TRAITEMENT DE PAROIS DE BASSINS AQUATIQUES AVEC MOBILE MOTORISE**
VORRICHTUNG ZUR BEHANDLUNG VON WÄNDEN VON WASSERBECKEN MIT MOTORISIERTEM LÄUFER
DEVICE FOR TREATING WALLS OF AQUATIC BASINS WITH MOTORIZED TRAVELLER

(30) Priorité: 12.06.2019 FR 1906228
(43) Date de publication de la demande: 20.04.2022
(73) Titulaire: Abyssnaut, 63880 Olliergues (FR)
(72) Inventeur: BERENGUER, Jérôme, 63880 Olliergues (FR)
(74) Mandataire: Gabriel, Franck
(86) Numéro de dépôt international: PCT/IB2020/055396
(87) Numéro de publication internationale: WO 2020/250120

(56) Documents cités:
- WO-A1-2016/142762
- DE-A1-102010 025 783
- FR-A1- 2 010 190
- FR-A1- 2 557 059
- US-A- 3 337 889

## Description

### DOMAINE TECHNIQUE DE L'INVENTION

La présente invention concerne un dispositif de traitement de parois internes de bassins aquatiques comportant au moins deux têtes ventouses reliées entre elles par un châssis et un ensemble de mobilité permettant de déplacer le dispositif de traitement le long d'une paroi à traiter.

### ETAT DE LA TECHNIQUE ANTERIEURE

Les bassins aquatiques tels que les aquariums sont destinés à être observés par le public et doivent par conséquent comporter des parois propres avec une haute qualité de transparence. Un nettoyage des surfaces transparentes des bassins aquatiques doit donc être régulièrement effectué. La plupart des bassins comportent plusieurs variétés de poissons et végétaux marins, souvent source de diverses salissures et entrainant le dépôt de biofilms le long des parois du bassin. Les biofilms peuvent facilement entraver la visibilité d'un aquarium au bout de seulement quelques jours. Les travaux de nettoyage des parois doivent donc être répétés à intervalles réguliers pour éviter que le biofilm ne devienne trop épais et difficile à retirer.

Différents procédés de l'art antérieur permettent d'effectuer le nettoyage des surfaces transparentes des aquariums. Souvent, les procédés connus nécessitent non seulement des moyens intrusifs néfastes envers les formes de vie présentes dans les bassins aquatiques, mais également une intervention humaine lourde et non aisément mise en oeuvre.

De manière générale, le nettoyage de surfaces transparentes de bassins aquatiques est effectué artisanalement. Les grands bassins sont souvent nettoyés par des opérateurs placés sur des surfaces disponibles au-dessus du bassin. Ils utilisent des perches munies de brosses ou éponges pour frotter les parois. Les déplacements effectués sont irréguliers et certaines zones peuvent être oubliées. La qualité du nettoyage est souvent approximative du fait de l'application d'une force de frottement non constante et d'un nombre de passages aléatoire.

D'autres modes de nettoyage sont également connus. On connaît par exemple des systèmes comportant un élément interne au bassin et un élément externe au bassin, les deux éléments coopérant ensemble grâce à un effet magnétique. Un opérateur, placé hors du bassin, peut alors déplacer l'élément externe, entrainant de ce fait l'élément interne.

Par exemple, la demande de brevet EP2012581 propose un dispositif de nettoyage de vitres d'aquarium, et notamment de vitres internes d'aquarium. Ce dispositif comporte un élément qui peut être positionné sur la paroi interne de la vitre d'aquarium. Le dispositif comprend également un élément externe qui est positionné sur la face externe de la paroi. Les éléments internes et externes du dispositif sont respectivement attirés par la force magnétique de façon à ce que l'élément interne du dispositif suive les mouvements de l'élément externe. Une surface de nettoyage est installée au sein du dispositif. Cette surface est tournée directement contre la paroi interne de l'aquarium. Ce dispositif facilite le nettoyage des parois de petites dimensions. Pour les grandes parois, souvent hautes, l'opérateur est contraint d'utiliser divers moyens pour pouvoir parcourir l'ensemble de la surface.

Le document EP1947932 concerne également un dispositif de nettoyage d'aquarium disposant d'un composant interne qui comporte une plaque servant de surface de nettoyage, ainsi qu'un composant de nettoyage alternativement opératif, situé sur une surface opposée à la surface à nettoyer. Un élément magnétique est placé sur la plaque et un moyen de flottaison figure à une extrémité de la plaque. Un composant extérieur comporte un corps se fixant à la surface extérieure d'une paroi de l'aquarium. Un second élément magnétique est porté par le corps, de telle sorte que le corps peut être positionné entre les deux éléments magnétiques avec la surface de nettoyage adjacente à la paroi d'aquarium. En déplaçant le corps entre les premières et secondes positions, le composant interne est déplacé à l'intérieur de l'aquarium afin de nettoyer les différentes surfaces.

Egalement, la demande WO2008006259 décrit un nettoyeur magnétique de vitres d'aquarium comprenant un élément de nettoyage intérieur destiné à glisser sur la surface intérieure de la vitre. Cet élément nettoyeur intérieur comprend un couvercle frontal, un couvercle dorsal, un aimant, ainsi qu'une surface de nettoyage. Le dispositif comprend également un élément nettoyeur extérieur positionné sur la surface extérieure de la vitre. La force magnétique entre les éléments nettoyeurs intérieurs et extérieurs permet d'entrainer le mouvement de l'élément de nettoyage intérieur par déplacement de l'élément de nettoyage extérieur.

La demande EP1738642 concerne un dispositif de nettoyage de surface interne d'un aquarium comportant un corps intérieur. Le corps intérieur comporte une surface de nettoyage composée de mousse, destinée à être en contact avec la paroi à nettoyer. Le corps intérieur est déplacé sur la surface magnétique grâce à la force magnétique le liant à un composant extérieur.

Le document WO2007127472 constitue encore un autre exemple de traitement et propose un mécanisme de préparation de surface à distance, telle que le nettoyage de la surface intérieure d'un aquarium géré de l'extérieur. Le dispositif de nettoyage comprend un corps doté d'au moins un élément magnétique qui est couplé, pour la commande à distance, avec des éléments magnétiques complémentaires, dans une tête d'entraînement mobile située à distance.

Enfin, le document WO0040080 décrit un dispositif de nettoyage de vitres d'aquariums, notamment de l'intérieur des vitres d'aquarium. Le dispositif comprend un élément intérieur, placé sur la paroi intérieure de la vitre, et un élément extérieur placé sur le côté extérieur de la vitre de l'aquarium. Ces éléments intérieurs et extérieurs s'attirent mutuellement sous l'effet d'une force magnétique, de sorte que le mouvement de l'élément extérieur le long de la vitre de l'aquarium provoque le même mouvement de l'élément intérieur. Le dispositif se caractérise en ce que l'élément placé à l'intérieur de l'aquarium est conçu pour flotter sur le milieu liquide contenu dans l'aquarium lorsque la force magnétique ne s'applique plus.

L'état de la technique, tel qu'illustré par les documents préalablement cités, propose des systèmes permettant de polir et/ou nettoyer des surfaces d'aquariums grâce à différents mécanismes magnétiques. De tels procédés présentent cependant certains inconvénients. La force magnétique nécessaire au traitement de surface implique d'installer deux éléments de part et d'autre de la paroi du bassin aquatique à traiter. Ce système oblige de plus à disposer d'un accès extérieur aisé quel que soit l'agencement des parois à nettoyer, ce qui n'est pas toujours le cas en pratique. La technique de traitement, notamment par mécanismes magnétiques, est bien souvent limitée à des parois relativement minces, ce qui exclut le traitement de grands bassins aquatiques, dont les parois peuvent atteindre plusieurs dizaines de centimètres d'épaisseur. Egalement, la mise en mouvement de l'élément magnétique fixé sur la paroi interne du bassin aquatique est engendrée par la mise en mouvement de l'élément externe, souvent par intervention humaine, excluant l'automatisation du procédé. Ces différents systèmes ne permettent pas de régler ou varier l'intensité de la force appliquée sur la face nettoyante. Enfin, la face nettoyante à l'intérieur du bassin est rapidement saturée de salissures et biofilm, diminuant considérablement la qualité du nettoyage.

On connaît également des systèmes de traitement pourvus de moyens de déplacement entièrement internes au bassin, comme par exemple tel que celui de la demande FR3067563, qui décrit un système de traitement de parois de bassins aquatiques comprenant une tête de traitement pourvue d'une chambre de confinement munie d'une ouverture orientable vers la paroi à traiter, ladite tête de traitement étant mobile sur un support à l'aide d'un moteur de déplacement de traitement pour permettre le traitement de ladite paroi, le support consistant en un support mobile repositionnable susceptible d'être fixé sur la paroi à traiter par des ventouses et comprenant un rail de déplacement pour traitement sur lequel la tête de traitement peut se déplacer, un rail de translation permettant de translater le support mobile lorsque la tête de traitement est à l'arrêt et fixée contre la surface en mode repositionnement du support mobile.

Le document FR3033229 (de la même famille que le document WO2016142762) décrit un système de traitement par polissage de parois internes de bassins aquatiques comportant un réservoir de mélange abrasif et une tête de traitement de surface en communication fluidique avec le réservoir de mélange abrasif, des rails permettant de déplacer la tête de traitement le long de la paroi à traiter, et des moyens permettant d'alimenter en flux sensiblement continu la tête de traitement en mélange abrasif. Ce document décrit un dispositif de traitement par polissage selon le préambule de la revendication indépendante 1, dans lequel un rail vertical se déplace en translation le long de rails horizontaux de guidage, le rail vertical permettant le déplacement vertical d'un châssis portant deux têtes ventouses de traitement de surface.

Ces deux derniers systèmes permettent d'assurer un guidage fiable, précis et sans risque de dévier de la trajectoire prévue, mais requièrent une installation lourde, encombrante et coûteuse. Par ailleurs, l'envergure imposante des rails rend ces systèmes incompatibles avec les bassins comportant des difficultés d'accès.

Le document FR2557059 décrit un véhicule à ventouses apte à circuler sur les surfaces verticales. Les ventouses sont agencées de façon à former des chenilles, disposées de chaque côté du véhicule. Les ventouses de ce véhicule servent de mobile à des fins de déplacement.

Le document FR201 0190 décrit un dispositif multifonctions apte à se déplacer le long d'une paroi. Selon un mode de réalisation particulier, le dispositif est adapté pour effectuer le nettoyage de parois de piscines. La tête de travail forme une grande ventouse unique. Des roues sont agencées sur les bords de la tête de travail pour assurer le déplacement. Le mobile est donc intégré dans la tête ventouse unique.

Le document US3337889 concerne un dispositif permettant de nettoyer les parois internes de grands bassins tels que des aquariums. La tête de travail forme une grande ventouse unique. Des roues sont agencées sur les bords de la tête de travail pour assurer le déplacement. Le mobile est donc intégré dans la tête ventouse unique.

Pour pallier ces différents inconvénients, l'invention prévoit différents moyens techniques.

### EXPOSE DE L'INVENTION

Tout d'abord, un premier objectif de l'invention consiste à prévoir un système de traitement, en particulier de nettoyage de parois de bassins aquatiques, qui soit simple, peu coûteux, et facile à mettre en oeuvre.

Encore un objectif de l'invention consiste à prévoir un système de traitement, en particulier de nettoyage de parois de bassins aquatiques, qui permet d'assurer un suivi précis et rigoureux de la trajectoire suivie le long de la paroi à traiter.

Enfin, un autre objectif de l'invention consiste à prévoir un système de traitement, en particulier de nettoyage de parois de bassins aquatiques, qui permet d'éviter de laisser des zones non traitées.

Pour ce faire, l'invention prévoit un dispositif de traitement de parois internes de bassins aquatiques, conformément à la revendication indépendante 1, comportant au moins deux têtes ventouses reliées entre elles par un châssis et un ensemble de mobilité pour déplacer le dispositif de traitement le long d'une paroi à traiter, ledit ensemble de mobilité comportant un mobile motorisé à roues, à galets ou à chenilles, ledit mobile étant activable ou orientable selon deux positions uniques de roulage angulairement espacées de 90 degrés l'une de l'autre, dans lequel le mobile est indépendant des têtes ventouses, relié au châssis et positionné au centre de ce dernier.

Un tel dispositif, mobile uniquement selon deux positions perpendiculaires l'une à l'autre, soit selon un axe X ou un axe Y, permet d'assurer un déplacement le long de la paroi à traiter facilitant la mise en oeuvre d'un traitement sans laisser de zone ou surface non traitée. En effet, les déplacements en X et Y uniquement permettent de conserver facilement une référence fiable, par exemple en relation avec la position de départ. Le comptage des tours de roue ou autre moyen permet de bien connaître la position du dispositif. Ces éléments de traçabilité peuvent permettre de mettre en place un déplacement automatisé simple et fiable du dispositif.

Les têtes ventouses et le mobile sont indépendants, c'est à dire distincts les uns des autres et assurant chacun une fonction spécifique, à savoir aspiration et éventuel traitement de paroi pour les têtes ventouses et déplacement du dispositif de traitement pour le mobile. Par ailleurs, la disposition centrale du mobile assure une stabilité et un équilibre dynamique. Une telle architecture avec plusieurs têtes ventouses permet d'augmenter le potentiel de travail de façon considérable. Le mobile unique, agencé centralement procure une architecture simple, efficace, et peu coûteuse, sans source de perturbation pour le bassin.

Selon un mode de réalisation avantageux, le mobile est relié au châssis par un support de mobile.

Selon un mode de réalisation avantageux, le mobile comporte au moins deux roues, galets ou chenilles séparées axialement par au moins un moteur étanche relié à ces roues. Cette architecture simple permet d'implanter un mode de motorisation efficace.

Selon un autre mode de réalisation avantageux, le mobile comporte un actionneur angulaire agencé afin de permettre l'orientation du mobile par rapport au dispositif de traitement selon deux positions uniques de fonctionnement, l'une orientée selon un axe X, l'autre orientées selon un axe Y.

De manière avantageuse, le mobile comporte un ou deux essieux motorisés, relié aux roues, l'actionneur angulaire étant disposé entre le ou les essieux motorisés.

Egalement de manière avantageuse, l'actionneur angulaire comprend un axe rotatif d'actionneur orienté perpendiculairement au plan formé par les roues du mobile. L'actionneur ainsi disposé permet de commander l'orientation des roues du mobile de façon simple et fiable.

Selon un mode de réalisation avantageux, l'actionneur angulaire est commandé par une commande à distance comportant un sélecteur de déplacement selon l'axe X ou Y. Une telle télécommande permet par exemple à un opérateur de gérer le déplacement du dispositif lors d'une phase de traitement. La télécommande comporte avantageusement d'autres éléments de commande, en particulier pour gérer le fonctionnement des têtes de travail, et/ou pour gérer le niveau d'adhérence ou de glissement des ventouses contre la paroi.

Selon un mode de réalisation avantageux, le châssis forme un cadre périphérique en forme de quadrilatère ou de triangle, les têtes ventouses étant disposées aux angles du cadre.

En variante, le châssis forme une droite, les têtes ventouses étant disposées aux extrémités de la droite.

Selon un autre mode de réalisation avantageux, la tête ventouse comprend un disque rotatif agencé de façon rotative et relié à un axe de rotation susceptible d'être entraîné par un moteur de disque, le disque rotatif portant une couche d'interface de paroi comprenant une pluralité de rainures radiales reliant le centre de rotation du disque à la périphérie du disque et au moins un orifice assurant, en fonctionnement dans un bassin aquatique à proximité immédiate d'une paroi à traiter, un flux d'eau entre l'arrière du disque et les rainures radiales agencés dans la portion du disque située du côté de la paroi à traiter.

Le système permet le nettoyage et l'élimination du biofilm présent sur les parois immergées des aquariums ou toute paroi de bassins aquatiques. Lorsque le disque rotatif est entrainé en rotation, et que celui-ci se trouve à une faible distance de la paroi à traiter, une aspiration est créée, entrainant le plaquage de la tête contre la paroi. Une circulation d'eau est réalisée. L'eau circule dans les rainures du disque de travail et est éjectée latéralement puis rejetée dans l'eau du bassin. Ainsi, l'eau circule dans la mousse de frottement du disque, assurant son rinçage et emportant avec elle le biofilm et autres salissures retirées de la paroi. Par ailleurs, plus le disque de travail tourne rapidement, plus l'aspiration et le frottement sur la paroi sont importants. Un tel agencement permet ainsi de placer et maintenir une tête de travail contre une paroi à traiter sans opérateur ou encore sans l'aide d'une hélice de propulsion placée à l'opposée du disque. L'effet hydrodynamique engendré par la rotation des rainures permet de réaliser une fonction ventouse. Un tel agencement permet de traiter des parois de grande surface de façon automatique ou semi-automatique sans intervention humaine dans le bassin.

De manière avantageuse, le disque de travail comprend au moins un orifice, prévu dans la zone centrale dudit disque. Ces orifices permettent d'assurer une circulation fluidique depuis l'eau du bassin vers la mousse de frottement et plus particulièrement les rainures radiales. La circulation d'eau permet de pérenniser l'action nettoyante de la mousse grâce à un effet autonettoyant de cette dernière.

Selon un mode de réalisation, le ou les orifices sont disposés sur le pourtour de l'axe de rotation. En variante, l'axe de rotation comporte un orifice traversant.

De manière avantageuse, la tête ventouse dynamique comprend une enveloppe périphérique axiale. L'enveloppe périphérique axiale comporte avantageusement une paroi latérale circonférentielle, agencée de façon à entourer le disque de travail. De cette façon, l'enveloppe périphérique permet de confiner l'action de la mousse rotative tout en minimisant les nuisances hydrodynamiques, par exemple pour faire en sorte que le sable ou des impuretés aux alentours de la paroi ne soient pas entrainés dans la mousse.

Selon un mode de réalisation avantageux, la couche d'interface comporte une surface de traitement et la tête ventouse dynamique sert d'une part à fixer le système de traitement à une paroi de bassin à traiter et d'autre part à effectuer un traitement de nettoyage ou de polissage de la paroi à l'aide de ladite surface de traitement.

Une variante avantageuse prévoit qu'une lumière d'évacuation est agencée à travers la paroi latérale de l'enveloppe périphérique axiale. Cette lumière permet la circulation du flux d'eau vers l'extérieur de l'enveloppe périphérique, entraînant les impuretés et salissures à l'extérieur de l'enveloppe.

De manière avantageuse, le disque de travail coopère avec l'enveloppe périphérique axiale par l'entremise d'au moins un ressort. L'enveloppe périphérique est ainsi mobile axialement par rapport au disque de travail. L'enveloppe périphérique coulissante axialement, maintenue contre la paroi à traiter par un ou plusieurs ressorts, permet de découpler l'effort exercé par l'enveloppe périphérique de celui exercé par le disque de travail. On prévoit par exemple un ressort de faible caractéristique de raideur afin de faire en sorte que l'enveloppe périphérique exerce un appui modéré contre la paroi. Par appui modéré, on entend une force d'appui permettant le maintien de l'enveloppe périphérique contre la paroi, tout en permettant à celle-ci et à l'ensemble de la tête de travail de glisser contre la paroi, pour permettre de nettoyer l'ensemble de la surface immergée de la paroi.

### DESCRIPTION DES FIGURES

Tous les détails de réalisation sont donnés dans la description qui suit, complétée par les figures 1 à 10, présentées uniquement à des fins d'exemples non limitatifs, et dans lesquelles :
- la figure 1 est une représentation schématique d'un exemple de réalisation d'un système de traitement, en particulier de nettoyage de paroi, utilisant un ensemble de mobilité avec mobile motorisé ;
- la figure 2 est une représentation schématique d'un exemple de réalisation d'un système de traitement, en particulier de polissage de paroi, utilisant un ensemble de mobilité avec mobile motorisé ;
- la figure 3 est une représentation schématique d'un exemple de réalisation d'un mobile motorisé vu de côté ;
- la figure 4 est une représentation schématique d'un exemple de réalisation d'un mobile motorisé vu de dessus ;
- la figure 5 est une représentation schématique d'un exemple de réalisation d'un système de traitement, en particulier de nettoyage de paroi, utilisant un ensemble de mobilité avec mobile motorisé orienté pour effectuer un déplacement selon l'axe Y ;
- la figure 6 est une représentation schématique d'un exemple de réalisation d'un système de traitement, en particulier de nettoyage de paroi, utilisant un ensemble de mobilité avec mobile motorisé orienté pour effectuer un déplacement selon l'axe X ;
- la figure 7 est une vue de face depuis l'extérieur d'un bassin aquatique d'un exemple de disque de travail;
- la figure 8 est une vue de face d'une variante de réalisation du disque de travail de la figure 7;
- la figure 9 est une représentation schématique d'un exemple de réalisation d'une tête de traitement;
- la figure 10 est une représentation schématique d'un autre exemple de réalisation d'une tête de traitement.

### DESCRIPTION DETAILLEE DE L'INVENTION

### DISPOSITIF DE TRAITEMENT DE PAROIS

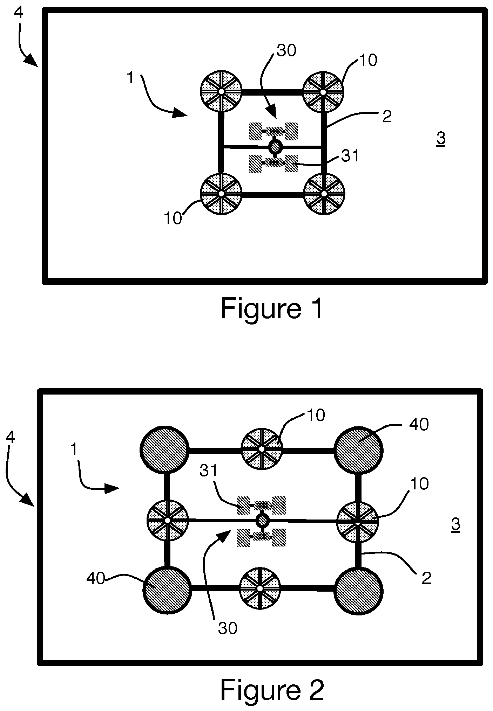

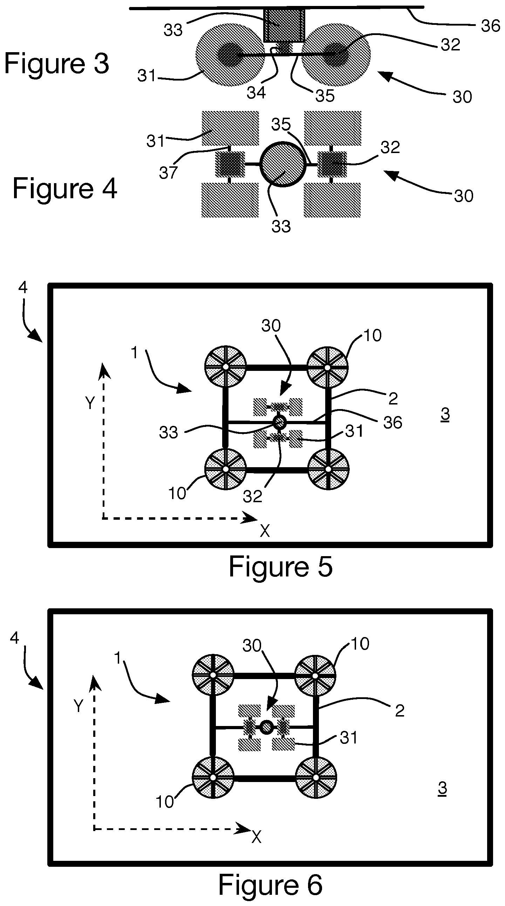

La figure 1 est une représentation schématique d'un exemple de réalisation d'un dispositif 1 de traitement par nettoyage de paroi. Un ensemble de quatre têtes 10 ventouses dynamiques à double fonction permettent d'une part de fixer le système 1 à une paroi 3 à nettoyer et d'autre part d'effectuer le nettoyage de la paroi au moyen d'une action mécanique de frottement non abrasif, par exemple à l'aide d'une couche d'interface 14 de paroi qui est spécifiquement adaptée à effectuer cette fonction de nettoyage, tel que décrit dans ce qui suit en relation avec les figures 6 à 9. Dans l'exemple illustré, les têtes dynamiques 10 sont prévues aux quatre coins du système de traitement afin de faciliter l'accès aux bords et aux coins des parois 3 à traiter. Les têtes 10 ventouses sont reliées entre elles par un châssis 2, dans cet exemple prenant la forme d'un assemblage de tubes en forme de carré ou rectangle. Le châssis 2 forme un cadre périphérique en forme de quadrilatère à l'intérieur duquel un mobile (décrit plus loin) est agencé centralement. D'autres types de configurations peuvent être prévues.

### MOBILE A ROUES MOTORISEES

Pour déplacer le dispositif de traitement, un mobile 30 comprend une ou plusieurs roues 31 ou galets ou chenilles disposés de façon à contacter la paroi 3 à traiter pour rouler sur cette dernière.

A des fins de simplifications, les figures 1 à 6 illustrent uniquement des exemples de réalisation dans lesquels le mobile comporte des roues ou galets 31. Dans ces différents exemples, les roues ou galets peuvent être remplacés par des chenilles.

Lorsque le mobile 30 comporte une seule roue ou galet, cette dernière peut pivoter à 90° au centre du dispositif de traitement 1 grâce à un actionneur angulaire, et elle est entrainée par un moteur étanche.

Lorsque le mobile 30 comporte plusieurs roues ou galets, deux de ses cotés parallèles comportent chacun une motorisation étanche capable d'entrainer toutes les roues d'un même coté. Lorsque le mobile 30 comporte des chenilles, deux de ses cotés parallèles comportent chacun une motorisation étanche capable d'entrainer la chenille d'un même coté. Tous ces ensembles sont de préférence commandés à distance par exemple à l'aide d'une télécommande adaptée.

L'action des roues, galets ou chenilles contre la paroi permet de déplacer le dispositif de traitement. La puissance d'aspiration des têtes ventouses dynamiques est dosée et adaptée de façon à permettre à la fois une force de fixation contre cette paroi ainsi qu'un frottement suffisant de la couche d'interface 14 pour assurer le nettoyage de la paroi, tout en permettant le déplacement le long de celle-ci par l'action des roues, galets, chenilles. La valeur de cette force d'aspiration adaptée peut être obtenue par l'assistance et l'action d'un ou plusieurs ressorts calibrés avantageusement agencés entre le châssis 2 du dispositif de traitement et le mobile à roue, chenille ou galet 30, et ainsi permettre l'adhérence optimum de ces derniers contre la paroi 3.

Un support 36 de mobile, dans cet exemple une tige, permet de relier le mobile 30 au châssis 2 du dispositif de traitement. Pour plus de stabilité et un bon équilibre dynamique, le mobile 30 est agencé au centre du châssis 2. Les motorisations et les disques des têtes ventouses sont de préférence prévus pour rotation en sens inverse afin de compenser l'effet de couple qui tend à faire tourner une tête unique en sens inverse du moteur d'actionnement du disque.

Diverses configurations non illustrées sont également prévues, comme par exemple une architecture avec deux têtes ventouses séparées par un mobile disposé entre les têtes. Le châssis 2 forme alors une droite ou barre portant les têtes ventouses à ses extrémités et le mobile 30 au milieu. Un agencement triangulaire, avec trois têtes et un mobile central, est également possible. Le châssis périphérique est alors agencé en forme de triangle. Les têtes ventouses sont disposées aux angles du triangle. Le mobile est positionné au centre du châssis triangulaire, fixé par exemple par un support 36 de mobile.

Le mobile 30 porteur des roues galets ou chenilles peut pivoter sur lui-même. Selon un premier mode, le pivotement est effectué par exemple : en mettant en rotations simultanément et à vitesse équivalente des roues, galets ou chenilles, mais en sens inverse pour chaque coté du mobile. Après le pivotement, les roues, galets ou chenilles peuvent être mis en rotation simultanément et à vitesse équivalente dans le même sens et ainsi permettre de déplacer le système de traitement dans toutes les directions utiles.

Un second mode de pivotement utilise un actionneur rotatif 33 relié à l'ensemble des roues galets ou chenilles par un axe 34 d'actionneur rotatif.

Dans les deux cas, l'axe de rotation du mobile 30 se trouve au centre du châssis 2 du dispositif de traitement.

En variante le mobile 30 peut être fixe par rapport au châssis 2 : dans ce cas les roues, galets ou chenilles peuvent être disposés de la manière suivante : selon l'axe X au moins une roue, galet ou chenille sont disposés sur deux cotés parallèles, avec leur motorisation étanche. Selon l'axe Y au moins une roue, galet ou chenille sont disposés sur deux cotés parallèles opposés à l'axe X avec leur motorisation étanche. Ces systèmes de déplacement comprenant roues, galets ou chenilles motorisés selon l'axe X et Y sont rétractables à tour de rôle grâce à des actionneurs. Cela permet de rester en contact avec la paroi à tout moment sans perdre la référence X ou Y. Lors d'un changement de direction, le dispositif de traitement 1 s'immobilise pour que la partie du mobile comprenant roues, galets ou chenilles qui étaient rétractés se déploient et une fois en contact avec la paroi la partie du mobile dédié à l'autre axe est rétracté à son tour, puis la rotation des éléments contre la paroi peut reprendre dans la nouvelle direction décalée de 90°.

Une autre variante prévoit au moins une roue, galet ou chenille motorisé rétractable de la paroi sur son mobile 30 grâce à un actionneur. Le mobile 30 pouvant pivoter sur lui-même à 90° grâce à un actionneur rotatif. Une fois que la nouvelle position angulaire selon l'axe X ou Y est atteinte, au moins une roue, galet ou chenille motorisé sont redéployés et mis en contact avec la paroi 3. Puis leur rotation contre celle-ci permet le déplacement du dispositif de traitement 1 dans une autre direction selon l'axe X ou Y.

On peut noter que quelque soit la variante choisie, des patins de blocages adhérents sur la paroi 3, peuvent être déployés par des actionneurs entre deux têtes ventouses 10 par exemple, pour améliorer la stabilité et le maintien de la référence de position des têtes ventouses 10 au moment du pivotement sur lui-même du mobile 30 ou de la rétractation de ses éléments.
Cet exemple est une option non limitative.

Le mobile monté pivotant permet une orientation de l'ensemble des roues, galets ou chenilles selon deux directions uniques et exclusives X et Y de référence. Par défaut, les déplacements dans toute autre direction sont inhibés ou bloqués. Ce mode est illustré aux figures 5 et 6. Ce mode permet d'assurer une bonne traçabilité de la trajectoire suivie et à suivre le long de la paroi à traiter en s'assurant que toute la surface est traitée. Par exemple, pour effecteur un traitement par succession de lignes parallèles, le système se déplace selon l'axe X jusqu'au bout d'une ligne, effectue ensuite un déplacement selon l'axe Y jusqu'à la ligne suivante, puis reprend un déplacement selon l'axe X en sens opposé. Le système peut ainsi se déplacer sur l'ensemble de la surface à traiter tout en évitant de dévier de la trajectoire. Le fait de conserver une traçabilité en conservant la référence de départ facilite la gestion du trajet de traitement, évitant de laisser des zones non traitées. Ce mode permet également d'assurer un déplacement en colonnes successives parallèles ou un mode hybride par exemple en effectuant des rectangles successifs. En variante, le mode de déplacement exclusivement selon l'axe X ou Y par défaut peut être désactivé, par exemple pour un déplacement occasionnel où l'on souhaite aller directement à un point précis d'une paroi, pour faire une retouche localisée ou autre.

Selon encore une variante, le dispositif de traitement 1 comporte un système automatisé. Ce système permet lorsqu'on actionne une commande de changement de direction sur la télécommande, l'arrêt du déplacement du dispositif de traitement 1, puis le repositionnement du mobile 30 selon l'axe X ou Y, puis la reprise du déplacement du dispositif de traitement 1 dans le sens souhaité de manière automatique, dès que le système de fin de course de repositionnement est activé. Cette aide à la conduite du dispositif de traitement 1 optimise davantage encore son mode de déplacement selon deux directions uniques et exclusives X ou Y de référence citées précédemment.

La figure 2 est une représentation schématique d'un exemple de réalisation d'un système de traitement par polissage de paroi. Un ensemble de quatre têtes ventouses dynamiques 10 à simple effet permettent de fixer le dispositif 1 à la paroi 3 à nettoyer. Quatre tête de travail 40 adaptées pour des tâches de polissage sont prévues aux quatre coins du dispositif afin d'effectuer le polissage de la paroi au moyen d'une action mécanique de frottement légèrement abrasif de type connu.

Dans l'exemple illustré, les têtes indépendantes 40 sont prévues aux quatre coins du système de traitement afin de faciliter l'accès aux bords et aux coins des parois 3 à traiter. D'autres types de configurations peuvent être prévues. Le déplacement du système le long de la paroi à traiter est assuré par un mobile 30 avec roues motorisées tel que préalablement décrit.

### DISQUE ROTATIF ET EFFET D'ASPIRATION

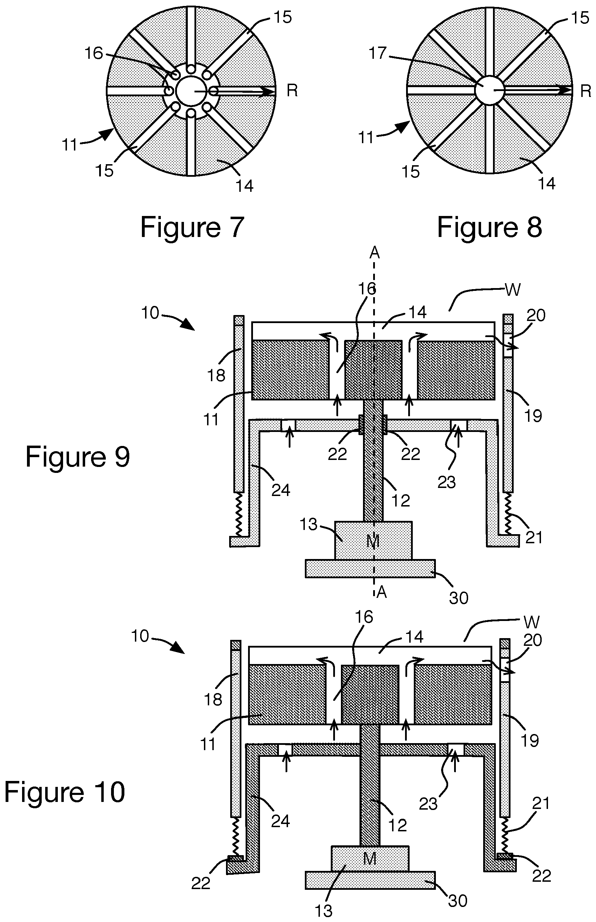

Les figures 7 et 8 illustrent des exemples de réalisation de disques 11 rotatifs vus depuis la face susceptible d'être en contact avec la paroi du bassin 4 à traiter. On observe que le disque 11, de rayon R, comprend une pluralité de rainures 15 ou cannelures radiales, c'est-à-dire orientées dans la direction du rayon R. Les rainures sont orientées radialement depuis le centre de rotation du disque. Dans l'exemple de réalisation de la figure 7, une pluralité d'orifices 16 sont agencés autour de l'axe de rotation. Chacun des orifices 16 communique avec une rainure 15. Dans l'exemple de réalisation de la figure 8, un orifice unique 17 est agencé centralement dans l'axe de rotation 12 reliant le disque 11 à un moteur 13 visible aux figures 9 et 10. L'orifice central 17 communique avec chacune des rainures 15. Du fait de cet ou de ces orifices 16 ou 17 et des rainures 15, lors de la mise en rotation du disque à proximité immédiate d'une paroi à traiter en milieu aquatique, un flux d'eau est généré entre l'arrière et l'avant du disque, soit depuis l'arrière du disque 11, puis traversant le disque et s'acheminant par les rainures 15 radiales agencées dans la portion du disque située du côté de la paroi. Ce flux hydrodynamique engendre un effet de ventouse ou d'aspiration qui tend à plaquer le disque contre la paroi à traiter. Le niveau de l'effet d'aspiration est ajustable en fonction du nombre et des dimensions des rainures, du diamètre du disque, du matériau utilisé, et surtout de la vitesse de rotation du disque. Cet effet ventouse permet aux disques de remplir diverses fonctions hydromécaniques, tel qu'expliqué dans ce qui suit.

### TETE VENTOUSE MONO OU DOUBLE FONCTION

Les figures 9 et 10 illustrent, en coupe, des exemples de tête ventouse dynamique 10 portant un disque tel que celui illustré à la figure 7 ou 8. Tel qu'illustré, le disque 11 comporte une couche d'interface 14 de paroi, du côté du disque prévu pour interfacer, avec ou sans contact, avec la paroi 3 à traiter. La couche d'interface 14 est soit séparée du disque 11, soit intégrale ou venue de matière avec le disque. Le disque 11 est réalisé dans un matériau rigide et de préférence non poreux, comme par exemple en aluminium. Les rainures 15 et les orifices 16 et 17 sont avantageusement réalisés dans la masse du disque 11.

En fonction des modes de réalisation, la tête ventouse dynamique met en oeuvre une seule ou deux fonctions Elle peut en effet générer une fonction ventouse, tel que préalablement décrit. Elle peut également générer un effet ventouse couplé à un effet de traitement de paroi, par exemple de nettoyage ou de polissage (mode duo).

Pour le mode duo, la couche d'interface 14 comprend une surface de traitement réalisée en matériau permettant d'effectuer un travail de nettoyage d'une paroi de bassin aquatique 4, souvent en PMMA, sans toutefois risquer d'abîmer cette dernière. La surface de traitement peut être réalisée par exemple : en polyuréthane ou en polyéthylène avec des duretés et des densités variables ainsi que des dimensions d'alvéoles (ouvertes ou fermées) et des porosités variables selon les objectifs du traitement

Pour le mode duo, une variante peut prévoir une couche interface constituée de lèvres plus ou moins souples, disposées dans le prolongement des parois des rainures 15, réalisées directement dans la masse du disque 11 ou dans celle de la couche d'interface 14. Nous parlons ici des parois des rainures 15 perpendiculaire à la paroi à traiter 3. Ces lèvres dépassent en hauteur de plusieurs millimètres de la surface du disque 11 ou de la couche d'interface 14. Elles peuvent représenter une longueur plus ou moins égale au rayon R du disque 11 et être simples ou doubles.

En effet la présence de ces lèvres, installées dans les rainures 15, bénéficient du flux d'eau dans ces dernières pour évacuer le biofilm arraché à la paroi lors de la rotation du disque 11.

Ainsi, dans ce mode à double fonction, la couche d'interface 14 est en contact avec la paroi à traiter.

Pour le mode mono fonction avec un simple effet de maintien, le disque 11 se trouve de préférence légèrement à distance de la paroi, par exemple de quelques millimètres, pour assurer l'effet hydrodynamique, tout en évitant le contact avec la paroi.

Un moteur 13 et un axe 12 orienté selon l'axe A-A, prévus au niveau de la tête ventouse, permettent une mise en rotation du disque rotatif 11. Lorsque le disque est immergé et se situe à une faible distance (par exemple 1 à 2 cm pour un disque d'un diamètre de 100 mm) d'une paroi à traiter, la rotation du disque cannelé produit une dépression qui tend à rapprocher le disque de travail de la paroi 3, cette dernière étant fixe. La tête ventouse 10 est agencée pour pouvoir se rapprocher de la paroi grâce à cet effet. Pour un disque du diamètre tel qu'évoqué précédemment, la vitesse de rotation permettant de produire l'effet hydrodynamique tendant à plaquer le disque contre la paroi à traiter est par exemple comprise entre 800 à 1200 tours/min (à titre d'exemple uniquement).

Les flèches des figures 9 et 10 illustrent un exemple de flux d'eau lorsqu'une tête ventouse est en place, contre une paroi d'un bassin aquatique 4. L'eau provient de l'arrière du disque de travail, passe par les orifices 16 ou 17 et communique ensuite avec les rainures radiales 15. Une fois le disque en place, le flux d'eau se poursuit de façon continue tant que la rotation du disque est maintenue. En plus de contribuer à l'effet ventouse, ce flux permet d'assurer un nettoyage de la surface de traitement pour éviter que le biofilm et autres salissures retirées lors du nettoyage de la paroi s'accumulent sur le disque et saturent la surface de traitement, empêchant le traitement de nettoyage de se poursuivre. Dans ce mode de réalisation à double fonction, le disque ventouse est en contact direct avec la paroi à traiter. Il agit par frottement contre celle-ci pour effectuer une action de nettoyage.

La tête ventouse 10 comprend de préférence une enveloppe périphérique 18 agencée de façon coaxiale avec l'axe de rotation 12. Cette enveloppe comporte une paroi latérale circonférentielle 19 agencée de façon à entourer le disque rotatif 11. Dans les exemples des figures 9 et 10, l'enveloppe se prolonge vers l'arrière des disques rotatifs pour entourer une portion de l'arbre 12. L'enveloppe permet de délimiter une zone de travail W à l'intérieur de laquelle le disque effectue une action de nettoyage contre la paroi à traiter. Cette zone de travail W est également délimitée à l'arrière du disque 11 par un couvercle 24, refermant l'enveloppe 18. Dans les exemples illustrés, le couvercle 24 est en forme de U inversé, avec une ouverture centrale pour laisser passer l'arbre 12 du moteur. Des orifices complémentaires 23, prévus dans le couvercle 24, assurent une communication fluidique entre la zone de travail W et la zone du moteur M. Le couvercle 24 peut également être plat ou en forme de U non inversé.

Une lumière 20 d'évacuation est agencée à travers la paroi latérale 19 de l'enveloppe périphérique 18 axiale. Ce tunnel permet au flux d'eau de quitter l'enveloppe pour aller rejoindre le bassin. Le tunnel est avantageusement positionné de telle sorte à se trouver dans la zone supérieure de la tête ventouse 10 lors des phases de nettoyage. On évite ainsi que le flux d'eau sortant agisse contre le sol du bassin, ce qui risquerait de repousser des cailloux ou particules ou salissures vers la tête de travail. Si jamais un corps étranger dur et/ou abrasif se retrouvait entre le disque de travail et la paroi à traiter, il y aurait alors d'importants risques de causer des rayures ou autres dommages à la paroi. L'enveloppe périphérique 18 procure une protection additionnelle contre l'arrivée de tels contaminants dans la zone de travail W. Un élément ou système de filtration peut être connecté sur cette lumière d'évacuation 20.

Pour éviter que l'enveloppe périphérique 18 exerce une force trop importante contre la paroi 3, un mode de réalisation prévoit que le disque rotatif 11 coopère avec cette enveloppe par l'entremise d'au moins un ressort 21. On utilise par exemple un ressort périphérique agencé axialement dans le prolongement de l'extrémité de l'enveloppe périphérique 18 opposée à la zone de travail W. Le ressort 21 agit d'une part sur l'enveloppe 18 et d'autre part sur le couvercle 24.

Contrairement à l'ensemble formé par le disque 11 et la couche d'interface, l'enveloppe périphérique 18 est conçue pour rester angulairement fixe, sans rotation, en regard de la paroi à traiter. Un joint circonférentiel ou un matériau d'une dureté inférieure à la paroi à traiter est avantageusement prévu à l'extrémité de contact de l'enveloppe périphérique 18. Ce joint ou ce matériau permet un contact doux avec la paroi, sans risque de l'endommager. La liaison entre la partie angulairement fixe de la tête et la partie rotative de la tête est assurée par un palier 22, comme par exemple un palier lisse ou à roulement. Les figures 9 et 10 illustrent deux modes de réalisation d'une tête ventouse 10. Dans le mode de réalisation de la figure 10 les parties pouvant être mises en rotation comprennent l'arbre 12, le disque 11, la couche d'interface 14 et le couvercle 24. Le palier 22 est agencé entre le couvercle et le ressort 21. Dans le mode de réalisation de la figure 9, les parties pouvant être mises en rotation comprennent uniquement l'arbre 12, le disque 11 et la couche d'interface 14. Le palier 22 est dans ce cas agencé entre l'arbre 12 et le couvercle 24.

### Numéros de référence employés sur les figures

### Bassin et dispositif de traitement

- 1: Dispositif de traitement de parois internes de bassins aquatiques
- 2: Châssis
- 3: Paroi à traiter
- 4: Bassin aquatique

### Tête ventouse dynamique

- 10: Tête ventouse dynamique
- 11: Disque rotatif
- 12: Arbre de rotation
- 13: Moteur de disque
- 14: Couche d'interface de paroi
- 15: Rainures radiales
- 16: Orifice de circulation de fluide
- 17: Orifice de circulation de fluide dans l'axe de rotation creux
- 18: Enveloppe périphérique axiale
- 19: Paroi latérale circonférentielle
- 20: Lumière d'évacuation
- 21: Ressort
- 22: Palier (lisse ou roulement)
- 23: Orifices de couvercle
- 24: Couvercle

### Ensemble de mobilité

- 30: Mobile à roues motorisées
- 31: Roues ou galets ou chenilles motorisés
- 32: Moteur étanche
- 33: Actionneur angulaire
- 34: Axe d'actionneur
- 35: Support moteur
- 36: Support de mobile
- 37: Essieu

- 40: Tête de travail indépendante

## Revendications

1. Dispositif de traitement (1) de parois (3) internes de bassins aquatiques (4), comportant au moins deux têtes ventouses (10) reliées entre elles par un châssis (2) et un ensemble de mobilité pour déplacer le dispositif de traitement (1) le long d'une paroi (3) à traiter, ledit ensemble de mobilité comportant un mobile (30) motorisé à roues, à galets ou à chenilles (31), ledit dispositif étant **caractérisé en ce que** le mobile (30) est activable ou orientable selon deux positions uniques de roulage angulairement espacées de 90 degrés l'une de l'autre, et **en ce que** le mobile (30) est indépendant des têtes ventouses, relié au châssis (2) et positionné au centre de ce dernier.

2. Dispositif de traitement selon la revendication 1, dans lequel le mobile (30) est relié au châssis par un support (36) de mobile.

3. Dispositif de traitement selon la revendication 1, dans lequel le mobile (30) comporte au moins deux roues, galets ou chenilles (31) séparées axialement par au moins un moteur (32) étanche relié à ces roues, galets ou chenilles.

4. Dispositif de traitement selon l'une quelconque des revendications 1 ou 2, dans lequel le mobile (30) comporte un actionneur angulaire (33) agencé afin de permettre l'orientation du mobile par rapport au dispositif de traitement selon deux positions uniques de fonctionnement, l'une orientée selon un axe X, l'autre orientées selon un axe Y.

5. Dispositif de traitement selon la revendication 4, dans lequel le mobile comporte un ou deux essieux (37) motorisés, relié aux roues, galets ou chenilles, l'actionneur angulaire (33) étant disposé entre le ou les essieux (37) motorisés.

6. Dispositif de traitement selon l'une quelconque des revendications 4 ou 5, dans lequel l'actionneur angulaire (33) comprend un axe (34) rotatif d'actionneur orienté perpendiculairement au plan formé par les roues, galets ou chenilles (31) du mobile.

7. Dispositif de traitement selon l'une quelconque des revendications 1 à 6, dans lequel le châssis (2) forme un cadre périphérique en forme de quadrilatère ou de triangle, les têtes ventouses étant disposées aux angles du cadre.

8. Dispositif de traitement selon l'une quelconque des revendications 1 à 6, dans lequel le châssis (2) forme une droite, les têtes ventouses étant disposées aux extrémités de la droite.

9. Dispositif de traitement selon l'une quelconque des revendications 1 à 8, dans lequel la tête ventouse (10) comprenant un disque rotatif (11) agencé de façon rotative et relié à un axe (12) de rotation susceptible d'être entraîné par un moteur (13) de disque, le disque rotatif (11) portant une couche (14) d'interface de paroi comprenant une pluralité de rainures (15) radiales reliant le centre de rotation du disque à la périphérie du disque et au moins un orifice (16, 17) assurant, en fonctionnement dans un bassin aquatique (4) à proximité immédiate d'une paroi (3) à traiter, un flux d'eau entre l'arrière du disque (11) et les rainures (15) radiales agencés dans la portion du disque située du côté de la paroi à traiter.

10. Dispositif de traitement selon la revendication 9, dans lequel la tête ventouse (10) comprend une enveloppe périphérique (18) axiale.

11. Dispositif de traitement selon l'une quelconque des revendications 9 ou 10, dans lequel la couche d'interface (14) comporte une surface de traitement et la tête ventouse sert d'une part à fixer le dispositif de traitement à une paroi de bassin à traiter et d'autre part à effectuer un traitement de nettoyage ou de polissage de la paroi à l'aide de ladite surface de traitement.

## Patentansprüche

1. Behandlungsvorrichtung (1) von Innenwänden (3) von Wasserbecken (4), die mindestens zwei Saugfüsse (10) umfasst, die miteinander von einem Gestell (2) verbunden sind, und eine Mobilitätsbaugruppe zum Verlagern der Behandlungsvorrichtung (1) entlang einer zu behandelnden Wand (3), wobei die Mobilitätsbaugruppe ein motorisiertes Fahrwerk (30) mit Rädern, Rollen oder Raupen (31) umfasst, wobei die Vorrichtung **dadurch gekennzeichnet ist, dass** das Fahrwerk (30) gemäß zwei eindeutigen Rollpositionen, die winkelig voneinander um 90 Grad beabstandet sind, aktivierbar oder ausrichtbar ist, und dass das Fahrwerk (30) von den Saugfüssen, die mit dem Gestell (2) verbunden und in der Mitte dieses Letzteren positioniert sind, unabhängig ist.

2. Behandlungsvorrichtung nach Anspruch 1, wobei das Fahrwerk (30) mit dem Gestell durch einen Fahrwerkträger (36) verbunden ist.

3. Behandlungsvorrichtung nach Anspruch 1, wobei das Fahrwerk (30) mindestens zwei Räder, Rollen oder Raupen (31) umfasst, die axial durch mindestens einen dichten Motor (32), der mit diesen Rädern, Rollen oder Raupen verbunden ist, getrennt sind.

4. Behandlungsvorrichtung nach einem der Ansprüche 1 oder 2, wobei das Fahrwerk (30) einen Winkelaktuator (33) umfasst, der dazu eingerichtet ist, die Ausrichtung des Fahrwerks in Bezug auf die Behandlungsvorrichtung gemäß zwei eindeutigen Betriebspositionen zu erlauben, wobei die eine entlang einer X-Achse ausgerichtet ist, die andere entlang einer Y-Achse ausgerichtet ist.

5. Behandlungsvorrichtung nach Anspruch 4, wobei das Fahrwerk eine oder zwei motorisierte Achsen (37) umfasst, die mit den Rädern, Rollen oder Raupen verbunden sind, wobei der Winkelaktuator (33) zwischen der oder den motorisierten Achsen (37) angeordnet ist.

6. Behandlungsvorrichtung nach einem der Ansprüche 4 oder 5, wobei der Winkelaktuator (33) eine Betätigungsrotationsachse (34) umfasst, die senkrecht zu der Ebene ausgerichtet ist, die von den Rädern, Rollen oder Raupen (31) des Fahrwerks gebildet ist.

7. Behandlungsvorrichtung nach einem der Ansprüche 1 bis 6, wobei das Gestell (2) einen umlaufenden Rahmen in Form eines Vierecks oder Dreiecks bildet, wobei die Saugfüsse an den Ecken des Rahmens angeordnet sind.

8. Behandlungsvorrichtung nach einem der Ansprüche 1 bis 6, wobei das Gestell (2) eine Gerade bildet, wobei die Saugfüsse an den Enden der Geraden angeordnet sind.

9. Behandlungsvorrichtung nach einem der Ansprüche 1 bis 8, wobei der Saugfuß (10) eine drehende Scheibe (11) umfasst, die drehend eingerichtet und mit einer Rotationsachse (12) verbunden ist, die von einem Scheibenmotor (13) angetrieben werden kann, wobei die drehende Scheibe (11) eine Wandgrenzflächenschicht (14) trägt, die eine Vielzahl radialer Nuten (15) umfasst, die die Rotationsmitte der Scheibe mit dem Umfang der Scheibe verbinden, und mindestens eine Öffnung (16, 17), die beim Betrieb in dem Wasserbecken (4) in unmittelbarer Nähe einer zu behandelnden Wand (3) einen Wasserfluss zwischen der Rückseite der Scheibe (11) und den radialen Nuten (15), die in dem Abschnitt der Scheibe, der auf der Seite der zu behandelnden Wand liegt, eingerichtet sind, sicherstellt.

10. Behandlungsvorrichtung nach Anspruch 9, wobei der Saugfuß (10) einen umlaufenden axialen Mantel (18) umfasst.

11. Behandlungsvorrichtung nach einem der Ansprüche 9 oder 10, wobei die Grenzflächenschicht (14) eine Behandlungsoberfläche umfasst, und der Saugfuß einerseits zum Befestigen der Behandlungsvorrichtung an einer Wand des zu behandelnden Beckens und andererseits zum Durchführen einer Reinigungs- oder Polierbehandlung der Wand mit Hilfe der Behandlungsoberfläche dient.

## Claims

1. A device (1) for treating internal walls (3) of aquatic tanks (4), having at least two suction heads (10) connected together by a framework (2) and a mobility assembly for moving the treatment device (1) along a wall (3) to be treated, said mobility assembly having a motor-driven carriage (30) with wheels, rollers or crawlers (31), said device being **characterized in that** said carriage (30) is able to be activated or oriented in two unique running positions that are angularly spaced apart from one another by 90 degrees, and **in that** the carriage (30) is independent of the suction heads, connected to the framework (2) and positioned at the center of the latter.

2. The treatment device as claimed in claim 1, wherein the carriage (30) is connected to the framework by a carriage support (36).

3. The treatment device as claimed in claim 1, wherein the carriage (30) has at least two wheels, rollers or crawlers (31) separated axially by at least one sealed motor (32) connected to these wheels, rollers or crawlers.

4. The treatment device as claimed in either one of claims 1 and 2, wherein the carriage (30) has an angular actuator (33) designed to allow the carriage to be oriented with respect to the treatment device in two unique operating positions, one oriented along an X axis, the other oriented along a Y axis.

5. The treatment device as claimed in claim 4, wherein the carriage has one or two motor-driven axles (37), connected to the wheels, rollers or crawlers, the angular actuator (33) being disposed between the motor-driven axle(s) (37).

6. The treatment device as claimed in either one of claims 4 and 5, wherein the angular actuator (33) comprises a rotary actuator shaft (34) oriented perpendicularly to the plane formed by the wheels, rollers or crawlers (31) of the carriage.

7. The treatment device as claimed in any one of claims 1 to 6, wherein the framework (2) forms a peripheral frame in the form of a quadrilateral or triangle, the suction heads being disposed at the corners of the frame.

8. The treatment device as claimed in any one of claims 1 to 6, wherein the framework (2) forms a straight line, the suction heads being disposed at the ends of the straight line.

9. The treatment device as claimed in any one of claims 1 to 8, wherein the suction head (10) comprises a rotary disk (11) that is designed to rotate and is connected to a rotary shaft (12) capable of being driven by a disk motor (13), the rotary disk (11) bearing a wall interface layer (14) comprising a plurality of radial grooves (15) connecting the rotational center of the disk to the periphery of the disk and at least one orifice (16, 17) that ensures, when in operation in an aquatic tank (4) in the immediate vicinity of a wall (3) to be treated, a flow of water between the rear of the disk (11) and the radial grooves (15) arranged in the portion of the disk that is situated next to the wall to be treated.

10. The treatment device as claimed in claim 9, wherein the suction head (10) comprises an axial peripheral sleeve (18).

11. The treatment device as claimed in either one of claims 9 and 10, wherein the interface layer (14) has a treatment surface and the suction head serves both to fix the treatment device to a tank wall to be treated and to carry out a cleaning or polishing treatment on the wall with the aid of said treatment surface.
